# EUROPÄISCHE PATENTSCHRIFT

(11) **EP 2 223 261 B1**
(45) Veröffentlichungstag und Bekanntmachung des Hinweises auf die Patenterteilung: **10.02.2016**
(21) Anmeldenummer: 07855664.4
(22) Anmeldetag: 11.12.2007
(51) Int. Cl.: G06K 7/00

(54) **RFID-NETZWERK UND EIN VERFAHREN ZUM BETRIEB DES RFID-NETZWERKS**
RFID NETWORK AND METHOD FOR OPERATING THE RFID NETWORK
RÉSEAU RFID ET PROCÉDÉ DE FONCTIONNEMENT DU RÉSEAU RFID

(30) Priorität: 06.11.2007 CH 17312007
(43) Veröffentlichungstag der Anmeldung: 01.09.2010
(73) Patentinhaber: Intermec IP Corp., Everett, WA 98203 (US)
(72) Erfinder: KÜNG, Roland, CH-8633 Wolfhausen (CH); GANGL, Gerhard, A-8355 Tieschen (AT)
(74) Vertreter: Houghton, Mark Phillip
(86) Internationale Anmeldenummer: PCT/CH2007/000624
(87) Internationale Veröffentlichungsnummer: WO 2009/059436

(56) Entgegenhaltungen:
- EP-A- 1 672 592
- US-A1- 2006 022 801
- US-A1- 2007 046 467
- US-A1- 2007 188 328
- KUENG, ROLAND: "RFID Journal LIVE! Europe 2007 - The Path to Scalable Performance in RFID Networks - From ETSI regulations to EB Identification Network" RFID JOURNAL, [Online] 8. November 2007 (2007-11-08), Seiten 1-26, XP002475625 Amsterdam, The Netherlands Gefunden im Internet: URL:http://www.rfidjournalevents.com/livee urope2007/pdfs_np/Nov8_11-50_SupplyChain_K uengRoland_Elektrobit.pdf> [gefunden am 2008-04-02]

## Beschreibung

Die vorliegende Erfindung fällt in das Gebiet der automatischen Identifikation (Funkerkennung) und Lokalisierung von Objekten; sie betrifft ein RFID-Netzwerk, umfassend eine Anzahl RFID-Schreib-/Lesegeräte für die Bearbeitung von elektronischen Etiketten und einen zentralen Kontroller, welcher an einen Anwendercomputer angeschlossen ist; die Erfindung betrifft ferner ein Verfahren zum Betrieb eines RFID-Netzwerks, umfassend eine Anzahl RFID-Schreib-/Lesegeräte (89) für die Bearbeitung von elektronischen Etiketten (6, 7, 8) und einen zentralen Kontroller (5), welcher an einen Anwendercomputer (9) angeschlossen ist.

### Stand der Technik

RFID-Schreib-/Lesegeräte (kurz: Lesegeräte) werden vermehrt in grosser Zahl auf begrenztem Raum, dem Fachmann bekannt unter dem Begriff *Dense Reader Environment,* eingesetzt und steuern Produktion und Warenfluss. Die Lesegeräte sind mit einem Kontrollprozessor (kurz: Kontroller) vernetzt, vorwiegend über LAN-, seltener über WLAN-Verbindungen. Der Kontroller, auch als *Edgeware Controller* bezeichnet, ist die Verbindungsstelle zu den Anwendungen, welche auf den Computern eines Betreibers laufen (auch als *Middleware Software* bezeichnet), wobei diese Computer abgefragte Dateninhalte darstellen. Der Kontroller hat drei Hauptaufgaben zu erfüllen, erstens die Steuerung und Kontrolle der Anzahl Lesegeräte, zweitens die Übersetzung der *High-Level* Aufgaben der *Middleware* in Anweisungen an die Lesegeräte zur Abfrage der Dateninhalte elektronischer Etiketten (kurz: Etiketten) und drittens eine weitere Bearbeitung der Dateninhalte der Etiketten mehrerer Lesegeräte zwecks Gewinnung der gewünschten Informationen für die *Middleware.* Kritische Punkte dabei sind beispielsweise die gegenseitige Störung (Interferenzen) der Lesegeräte, welche mit hohen Sendeleistungen arbeiten, die grosse Anzahl von Datenpaketen, die über das Kommunikationsnetzwerk zum Kontroller laufen und die Belastung des Kommunikationsnetzwerks durch andere Prozesse des Betreibers. Verschiedene Verfahren wurden vorgeschlagen, um das eine oder andere dieser Probleme zu entschärfen.

So schlägt die US20060279406 ein Synchronisieren von Lesegeräten vor, durchgeführt durch eine *Master-Station,* die ein Taktsignal auf einen separat verdrahteten Synchronisations-Bus liefert; dessen Verfügbarkeit ist zwar hoch, bedeutet jedoch einen zusätzlichen Aufwand an *Hardware* und deren Verkabelung.

Die US20070001813 benutzt einen zentralen Kontroller für eine Synchronisation von Lesegeräten und eliminiert dabei die zusätzliche Taktleitung. Der Kontroller bildet Gruppen von Lesegeräten, welche sich nicht gegenseitig stören und arbeitet dann nach einer zeitlichen Abfolge, einem Fahrplan (*Schedule*)*.* Diese Massnahmen sind dem Fachmann auch als SDMA und TDMA bekannt. Diese Methode ist -wie andere auch- geeignet eine statische Synchronisation der Lesegeräten herbeizuführen, bedingt aber eine hohe Verfügbarkeit des Kommunikationsnetzwerks, weil der Fahrplan im Kontroller abgelegt ist.

In der US20050088284 wird vorgeschlagen, dass eine Interferenz-Liste in jedem Lesegerät bereitgehalten wird, wobei diese Interferenz-Liste einen gleichzeitigen, sich störenden Betrieb benachbarter Lesegeräten verhindern soll. Über eine Signalisierung auf dem Netzwerk teilen aktive Lesegeräte Anfang und Ende einer Sendephase den benachbarten Lesegeräte mit. Sie erlauben damit eine Form von *Listen Before Talk* Technik, so dass durch Entscheidungen in jedem Lesegeräte ebenfalls Interferenzen vermieden werden können.

In der EP1762960 ist ein Verfahren zum Betrieb mehrerer Lesegeräte dargelegt, bei dem verschiedene Kommunikationsprotokolle verwendet werden können, wie beispielsweise unterschiedliche Modulation, Frequenz, Kodierung, Datenrate, so dass keine Interferenzen entstehen. Wiederum ist dazu in jedem Lesegerät ein Fahrplan (*Schedule*) in einem Speicherbereich abgelegt. Die Synchronisation wird entweder durch einen *Master* oder durch einen Koordinator mit einem Aktivitätsmonitor bewerkstelligt. Die Lesegeräte untereinander können sich mittels einem Aktivitätssignal verständigen, um Interferenzen zu verhindern. Die vorgestellte Lösung zielt vor allem auf Anwendungen mit zwei unterschiedlichen Protokollen ab, wie zum Beispiel *Near Field Communication* (NFC) oder *Contactless Smart Card* ab, welche sich beide beispielsweise in einem Zellulartelefon oder einem PDA befinden können und sich gegenseitig behindern würden.

In der WO2007078440 wird einem Lesegeräte ein gewisses Mass an Intelligenz zur Optimierung eines RFID-Netzwerks (nicht zu Verwechseln mit einem LAN-Netzwerk zwischen Kontroller und Lesegeräten) zugefügt. Das RFID-Netzwerk ist ohne Kontroller ausgebildet und bildet sich selber aus, nach bekannter Art, der so genannten Ad-hoc-Netzwerke, im Bereich der drahtlosen Sensorennetze. Anstelle des Kontrollers werden eine *Primary* und mehrere *Secondary* Lesegeräte eingeführt, wobei das *Primary* Lesegerät Teile der Aufgaben des Kontroller übernimmt. Die Leistungsfähigkeit eines *Primary* Lesegeräts kann in keinem Fall diejenige eines Kontrollers erreichen und kommt deshalb in grossen Netzwerken rasch an ihre Grenzen. Vor allem bezüglich wichtigen Merkmalen von grossen RFID-Netzwerken, wie Verfügbarkeit, Redundanz, Fehlertoleranz und Lastausgleich sind hier Grenzen gesetzt. Ein Speicherblock mit RFID-Netzwerkregeln verhindert gegenseitige Störungen, indem das *Primary* Lesegerät die Frequenz- und Zeitschlitz-Resourcen als Netzwerkregeln verwaltet und den *Secondary* Lesegeräten zuteilt. Ferner steht ein Optimierungsmodul zur Verfügung, welches Daten der elektronischen Etiketten statistisch und logisch bearbeiten und geplante Bearbeitungen anderer Stationen in die Aktivität mit einbeziehen kann, was vor allem bei der Bearbeitung einer elektronischen Etikette durch mehrere Stationen dienlich ist. Die Stationen organisieren sich selber, insbesondere in einer solchen Ausführung, welche gar auf eines *Primary* Lesegeräts verzichtet. Diese Methode hat den Nachteil, dass die Konvergenz und der stabile Betrieb nicht ohne weiteres sichergestellt werden kann und wenig beeinflussbar ist, da sich das RFID-Netzwerk sehr dynamisch und wie in der WO2007078440 festgehalten, ähnlich einem neuronalen Netz verhält. Die Kommunikation zwischen Lesegeräten kann auch über dieselbe Antenne wie für die Bearbeitung der elektronischen Etiketten getätigt werden.

Eine weitere Kommunikationsmöglichkeit über die Luftschnittstelle mit Synchronisation von Lesegeräten und ein darauf basierende Verfahren sind in EP1719067 mittels des so genannten *Reader Service Signals* ausgeführt.

Die US20070046467 zeigt ein Netzwerk, welches Lesegeräte in einer Kette an einen Kontroller (dort Server genannt) anbindet. Das erste Lesegerät kommuniziert mit dem Server und einem zweiten Lesegerät, welches wiederum mit einem weiteren Lesegerät in Verbindung steht. Um ein Taktsignal für eine Synchronisation der Schreib-/Lesezyklen in jedem Lesegerät zur Verfügung zu haben, beziehen sie periodisch die Zeit von einem so genannten *Network Time Protocol* (NTP) Server oder von einer Uhr in einem ersten Lesegerät, welches an den Server angeschlossen ist.

In der EP1672592 wird anschaulich die Aufgabe eines Kontrollers für skalierbare, grosse RFID-Netzwerke dargelegt. Insbesondere sind Beispiele von Datenverarbeitungen ausgelesener Etiketten ausgeführt. Dem Kontroller kommt dabei praktisch die vollständige Aufgabe zu, die Lesegeräte zu steuern und Daten zu verarbeiten. Über ein Benutzer/Anwender-Interface können Anwendungsprogramme (auch als Konfiguration bezeichnet) zur Bearbeitung von Etiketten in den Kontroller eingegeben werden (*Middleware Interface*). Mit den von den ausgewählten Lesegeräten gelesenen Daten erfolgt dann entsprechend im Kontroller die Bearbeitung. Der Kontroller steuert dabei jede Aktion der Lesegeräte, wie beispielsweise Antennenwahl, einzeln.

Dem Stand der Technik ist gemeinsam, dass ein RFID-Netzwerk mit grosser, bzw. zunehmender Anzahl von zu steuernden Lesegeräten und wachsender Anzahl auszulesender Etiketten an Bearbeitungsgrenzen stösst und somit die Auslesegeschwindigkeit durch die Verfügbarkeit des Kommunikationsnetzwerks und/oder durch die mitwachsenden Interferenzen auf der Luftschnittstelle eingeschränkt wird. Das Kommunikationsnetzwerk ist oft Teil der Infrastruktur eines Anwenders und es laufen darauf die vielfältigsten Prozesse. Dies hat zur Folge, dass ein Kommunikationsnetzwerk zwischen Lesegeräten und einem sie verbindenden Kontroller zwischenzeitlich für diese Lesegeräte nicht verfügbar ist, oder dass ein solches Kommunikationsnetzwerk zu wenig Kapazität aufweist, um alle aus Etiketten gelesene Daten zeitrichtig an den Kontroller zu senden. An dieser Stelle sei erwähnt, dass jedes Etikett bei einer Abfrage meist mehrfach erfasst wird solange es sich im Feld eines oder mehrerer Lesegeräte befindet. Eine einfache, d.h. unkoordinierte Übertragung all dieser Daten durch konventionelle, unintelligente Lesegeräte ist im Allgemeinen nicht sinnvoll, vor allem nicht in grossen RFID-Netzwerken.

Die US 2007/0188328 beschreibt eine Technik zur Verhinderung des Auftretens von Interferenzen selbst wenn eine Vielzahl von RFID-Antennen gleichzeitig verwendet wird. An jeder RFID-Antenne ist ein Kalibrierungs-RFID-Tag angebracht. Eine Kombination von RFID-Antennen, die ein Problem verursacht, wird abhängig davon bestimmt, ob Information auf dem RFID-Tag von jeder der RFID-Antennen, die das Lesen gleichzeitig durchgeführt haben, gelesen werden kann. Daraufhin wird eine RFID-Antennenbenutzungsprozedur generiert, sodass die RFID-Antennen in der bestimmten Kombination nicht gleichzeitig benutzt werden.

### Darstellung der Erfindung

Es ist deshalb Aufgabe der vorliegenden Erfindung für ein RFI D-Netzwerk, dieses dahingehend weiterzubilden, dass ein möglichst fehlerfreies und rasches Auslesen von Etiketten mit Lesegeräten ermöglicht wird. Es ist ferner Aufgabe der vorliegenden Erfindung für ein Verfahren zum Betrieb eines RFI D-Netzwerks, dieses ebenfalls dahingehend weiterzubilden, dass ein möglichst ungestörtes und schnelles Bearbeiten von Etiketten in einem umfangreichen RFID-Netzwerk ermöglicht wird.

Die Lösung der der Erfindung für ein RFID-Netzwerk zugrunde liegenden Aufgabe ist in Anspruch 1 angegeben. Diesen Erfindungsgedanken weiterbildende Merkmale sind Gegenstand der Unteransprüche 2 und 3.

Das erfindungsgemässe RFID-Netzwerk weist RFID-Schreib/Lesegeräte (im Folgenden kurz: Lesegeräte) auf, die jeweils mit einer Missionsempfangsvorrichtung und einem ersten Netzwerk-Interface eine RFID-Systemeinheit bilden, wobei ein zentraler Kontroller im RFID-Netzwerk eine Missionssendevorrichtung und ein zweites Netzwerk-Interface umfasst und wobei das zweite Netzwerk-Interface des Kontrollers über ein Kommunikationsnetzwerk mit dem ersten Netzwerk-Interface aller RFID-Systemeinheiten verbunden ist. Der Kern der Erfindung ist darin zu sehen, dass durch einen Versand einer individuellen Mission von der Missionssendevorrichtung des Kontrollers zu jeder Missionsempfangvorrichtung einer RFID-Systemeinheit, diese anschliessend für ein Betriebsintervall selbständig arbeitet, wobei die erhaltene Mission alle nötigen Anweisungen hinsichtlich Startzeit der Mission, Abfolge zu wählender Antennen, bzw. Frequenzkanäle und der Bearbeitung von Etiketten und deren Dateninhalte enthält. Dabei ist von besonderem Vorteil, dass die Aufgaben von Kontroller und Lesegeräten verteilt ausgeführt werden, so dass ein die Lesegeräte verbindendes Kommunikationsnetzwerk, welches den mindestens einen Kontroller mit einer Anzahl Lesegeräten verbindet, wenig belastet wird und die einzelnen Lesegeräte für eine bestimmte Zeit selbständig ihre Aufgabe erfüllen können.

Ferner ist vorteilhaft, dass die Lesegeräte zwar synchronisiert auf ein Zeitsignal arbeiten, sie bestimmen aber selbständig ihren Frequenzkanal und Zeitschlitz zur Abfrage einer Anzahl elektronischer Etiketten, ohne Interferenzen zu erzeugen. Das System arbeitet zudem adaptiv und erlaubt den Lesegeräten gegenseitig Parameter zur Beeinflussung der Ausführungsanweisungen zu übermitteln. Darüber hinaus eignet sich das System zur organisierten, adaptiven Bearbeitung von Etiketten, wobei darunter auch (passive) Sensoren zu verstehen sind, welche dasselbe Funkverfahren benutzen.

Im Unterschied zum Stand der Technik ist weder der Kontroller allein für jede detaillierte Steuerungsanweisung verantwortlich, noch ist das RFID-Netzwerk dynamisch selbst konfigurierend aufgebaut.

Mit Vorteil umfasst die Missionsempfangvorrichtung eine Parameterausführungsvorrichtung, eine Anweisungsvorrichtung und eine Zeitsynchronisationseinheit, die jeweils mit einem zugehörigen Kontrollparametergenerator, einem Anweisungsgenerator und einem Zeitsynchronisationsgenerator der Missionssendevorrichtung des Kontrollers kommunizieren.

Die Lösung der der Erfindung für das Verfahren zum Betrieb eines RFI D-Netzwerks zugrunde liegenden Aufgabe ist in Anspruch 4 angegeben.

Diesen Erfindungsgedanken weiterbildende Merkmale sind Gegenstand der abhängigen Ansprüche 5-14.

Bei dem erfindungsgemässen Verfahren zum Betrieb eines RFI D-Netzwerks, umfassend eine Anzahl RFID-Schreib-/Lesegeräte für die Bearbeitung von elektronischen Etiketten) und einen zentralen Kontroller, welcher an einen Anwendercomputer angeschlossen ist, kommuniziert ein RFID-Schreib-/Lesegerät, dass jeweils mit einer Missionsempfangsvorrichtung und einem ersten Netzwerk-Interface eine RFID-Systemeinheit bildet, mittel dieser RFID-Systemeinheit über ein Kommunikationsnetzwerk mit dem zentralen Kontroller, der selbst ein zweites Netzwerk-Interface und eine Missionssendevorrichtung aufweist.

Dabei kommuniziert jede Missionsempfangsvorrichtung einer RFID-Systemeinheit mittels einer Parameterausführungsvorrichtung mit einem Kontrollparametergenerator der Missionssendevorrichtung im Kontroller. Ferner kommunizieren eine Anweisungsvorrichtung der Missionsempfangsvorrichtung mit einem Anweisungsgenerator der Missionssendevorrichtung miteinander und eine Zeitsynchronisationseinheit der Missionsempfangsvorrichtung mit einem Zeitsynchronisationsgenerator der Missionssendevorrichtung.

Erfindungsgemäss wird vor einem Betriebsintervall der Lesegeräte vom Kontroller an jede RFID-Systemeinheit eine Mission verteilt, umfassend eine Anzahl Kontrollparameter und/oder eine Anzahl Anweisungen und/oder Programme und/oder eine Anzahl Zeitangaben. Jede Mission wird anschliessend lediglich mittels vom Kontroller periodisch verteilten Zeitmarken auf den RFID-Systemeinheiten selbständig innerhalb eines Zeitraums, bestehend aus einem oder mehreren Betriebsintervallen, zur Bearbeitung einer Anzahl elektronischer Etiketten durchgeführt. Der Kern der Erfindung ist darin zu sehen, dass durch einen Versand der individuellen Mission von der Missionssendevorrichtung des Kontrollers zu jeder Missionsempfangvorrichtung einer RFID-Systemeinheit, diese anschliessend für ein Betriebsinterfall selbständig arbeitet, wobei die erhaltene Mission alle nötigen Anweisungen hinsichtlich Startzeit der Mission, Abfolge zu wählender Antennen, bzw. Frequenzkanäle und der Bearbeitung von Etiketten und deren Dateninhalte enthält. Dabei ist von besonderem Vorteil, dass die Aufgaben von Kontroller und Lesegeräten verteilt ausgeführt werden, so dass das die Lesegeräte verbindende Kommunikationsnetzwerk, welches den mindestens einen Kontroller mit einer Anzahl Lesegeräten verbindet, wenig belastet wird und die einzelnen Lesegeräte für eine bestimmte Zeit selbständig ihre Aufgabe erfüllen können.

Die RFID-Systemeinheiten beteiligen sich intelligent an Anwendungsprogrammen eines Benutzers, sie kümmern sich selber um einen störungsfreien Betrieb und werden durch den Kontroller adaptiv an sich ändernde Situationen und Aufgaben angepasst, ohne dass die RFID-Systemeinheiten vollständige Eigenständigkeit erlangen. Die Anwenderschnittstelle soll -für jede Struktur des Kommunikationsnetzwerks immer gleich bleibend- über einen Kontroller führen, was nicht ausschliesst, dass mehrere Kontroller zwecks Verfügbarkeit und Redundanz beteiligt sind. Durch diesen Aufbau ist das Netzwerk in der Grösse einfach skalierbar.

Die RFID-Systemeinheiten besitzen Ressourcen, welche eine ausreichende Intelligenz sicherstellen (Prozessorleistung, Speicher), um Teilaufgaben des Kontrollers ausüben zu können. Das Verfahren zur Steuerung eines adaptiven Betriebs des Kommunikationsnetzwerks ist hier erstmalig mit der vorliegenden Erfindung gelöst.

Eine Mission -im Sinn der vorliegenden Erfindung- ist eine Sammlung von Einstellparametern, Listen von Parametern mit Freiheitsgraden, Fahrplandaten und Anweisungen, welche Teilprogramme zur Bearbeitung von Daten der Etiketten in den RFID-Systemeinheiten ermöglichen, inklusive Zeitangaben zum Ausführungsbeginn und deren Dauer. Missionen werden vom Kontroller während einer verfügbaren Phase des Kommunikationsnetzwerks an die RFID-Systemeinheiten übermittelt, von diesen gespeichert und bestätigt. Dabei kann jede RFID-Systemeinheit eine andere oder mehrere Missionen empfangen und abarbeiten. Jede RFID-Systemeinheit besitzt entsprechende Programmteile, um die Mission zu dekodieren und auszuführen. Durch die Missionen sind die RFID-Systemeinheiten während deren Dauer selbständig, insbesondere auch dann, wenn das Kommunikationsnetzwerk ausfällt. Die Missionen enthalten auch die Angaben für eine Reduktion gelesener Daten von Etiketten und Angaben für eine Reduktion von Mehrfachlesungen, soweit das eine einzelne RFID-Systemeinheit überblicken kann, das heisst die von ihr gelesenen Etiketten betreffend. Solche Vorverarbeitungen können beispielhaft Datenfilterung, Anhäufung, Suche, Korrelation und Zwischenspeicherung umfassen. Dadurch, dass diese und gegebenenfalls weitere Aufgaben in den RFID-Systemeinheiten erledigt werden, werden das Netzwerk und der Kontroller entlastet. Der Kontroller nimmt dann vorteilhaft nur noch diejenigen Bearbeitungen wahr, welche als Eingang die Daten von Etiketten benötigen, die von verschiedenen RFID-Systemeinheiten erfasst wurden.

Der Kontroller nimmt die Zeitsynchronisation der RFID-Systemeinheiten wahr, indem er periodisch die Systemzeit als Zeitmarke an alle RFID-Systemeinheiten versendet (z.B. Broadcast). Auf jede dieser Zeitmarken stellen die RFID-Systemeinheiten ihre eigene Uhr nach, wobei der interne Zeitgeber genügend Stabilität aufweist, um auch bei längerem Unterbruch eine genügend lange Zeit selbständig synchron zu bleiben. Typischerweise beträgt die Zeittoleranz in einer RFID-Systemeinheit 10 ppm, also 1 ms pro 100 s.

Eine weitere vorteilhafte Ausgestaltung der Erfindung sieht vor, dass die Zeitsynchronisation nicht vom Kontroller gesteuert wird, sondern von einer ausgewählten RFID-Systemeinheit, welche vom Kontroller bei der Inbetriebnahme dazu bestimmt wurde. Die Synchronisationsmarken können auch über die Luftschnittstelle übertragen werden. Diese Methoden können auch als Backup Funktion bei einem langfristigen Ausfall des Kommunikationsnetzwerks in Aktion treten.

Um Interferenzen, Störungen durch benachbarte aktive RFID-Systemeinheiten, zu verhindern, sendet der Kontroller in einer weiteren Ausführung der Erfindung an alle RFID-Systemeinheiten eine spezielle Mission, welche die RFID-Systemeinheiten in einen Zustand zum Erfassen des Potentials von Interferenzen bringt. Dazu wird in bekannter Weise jede RFID-Systemeinheit einmal zu einem vorgegebenen Zeitpunkt und für eine vorgegebene Dauer zum Senden eines Trägersignals veranlasst, während die übrigen RFID-Systemeinheiten die empfangene Signalstärke messen und mit dem Zeitintervall zusammen abspeichern. Nach dem Durchlauf aller Kombinationen ist in jeder RFID-Systemeinheit das Interferenzpotential abgespeichert. Gemäss der Anweisung in der Mission werden diese Daten zu einem vorgegebenen Zeitpunkt an den Kontroller gesendet. Der Kontroller berechnet daraus einen Betriebsfahrplan (auch *Schedule* genannt) für die RFID-Systemeinheiten, welcher einen Interferenz-freien Betrieb garantiert. Dazu stehen ihm Frequenzkanäle und Zeitschlitze zur Verfügung, sowie die Wahl der Antennen, welche an eine RFID-Systemeinheit angeschlossen sind. Die erstellten Fahrpläne werden sodann den RFID-Systemeinheiten wieder übermittelt. Von da an weiss jede RFID-Systemeinheit, welche Frequenzkanäle sie wann verwenden darf. Temporäre Änderungen zu diesen Fahrplänen können Teil einer jeden folgenden Mission bilden.

Solcher Bedarf für Änderungen kann vielfältig entstehen. Einerseits kann sich die Priorität in der Bearbeitung von Etiketten verschieben, so dass einige RFID-Systemeinheiten mehr Ressourcen benötigen als andere, und der Fahrplan damit punktuell vom Kontroller abgeändert wird. Es kann sich aber auch eine beispielsweise mobile RFID-Systemeinheit im Netzwerk anmelden und Ressourcen beim Kontroller verlangen. Daraufhin wird der Kontroller ebenfalls temporär neue Details zum Fahrplan in Missionen verpacken und an entsprechend betroffene RFID-Systemeinheiten versenden.

In einer weiteren erfindungsgemässen Ausführungsform melden die RFID-Systemeinheiten eine Zunahme von Störungen, welche auf eine grössere Veränderung im Umfeld schliessen lässt (Ausbreitungsbedingungen für die Funksignale oder fremde Sendegeräte in der Nähe). Daraufhin kann der Kontroller wiederum eine Mission zum Erfassen des Interferenzpotentials an die betroffenen, meist lokal begrenzten RFID-Systemeinheiten senden. Diese Art des geführten, adaptiven Betriebs eines RFID-Netzwerks zeichnet das vorgeschlagene Verfahren gegenüber dem Stand der Technik aus.

Das ganze RFID-Netzwerk ist -wie an diesem Beispiel gezeigt- kontrolliert adaptiv und doch ist jede RFID-Systemeinheit intelligent genug um selbständig nach einer lokal gültigen Mission zu arbeiten. Dadurch wird vorteilhaft kein dauernd verfügbares Kommunikationsnetzwerk vorausgesetzt. Die RFID-Systemeinheiten können auch eine Abfolge von Missionen erhalten, da jede Mission Zeitpunkt und Dauer der Ausführung beinhaltet.

In einer weiteren Ausführungsform enthalten die Missionen Daten zum störungsfreien Betrieb, welche Frequenzkanal-, Zeitschlitz-, Leistungs- und Antennenwahl festlegen. Ebenso lassen sich verschiedene Funktionen wie Modulationsarten, Datenraten, Empfängerfiltereinstellungen, Entscheidungsschwellen und so weiter einbinden, so dass für jede Aufgabe die optimalen Betriebsparameter an jeder RFID-Systemeinheit eingestellt werden können.

In einer weiteren Ausführungsform können anstelle nur eines Parameters pro Funktion auch eine Liste von erlaubten Parametern definiert werden, innerhalb dieser Liste die RFID-Systemeinheit mit Hilfe ihrer Intelligenz und Ergebnissen aus der eignen Signalverarbeitung selber eine geeignete Auswahl trifft. Ein Beispiel einer solchen Liste ist die Folge von Frequenzkanälen, die zu benutzen sind für Länder/Regionen, welche ein so genanntes *Frequency Hopping* des Trägersignals vorschreiben. Zusammen mit dem synchronen Betrieb ist ein pseudo-zufälliges *Frequency Hopping* möglich, welches Kollisionen auf der Luftschnittstelle ganz verhindert.

In einer weiteren Ausführungsform enthalten Missionen Teilprogramme oder Parameter für bereits programmierte Routinen, welche zur Datenverarbeitung in der RFID-Systemeinheit benötigt werden, wie Filterung der gelesenen Etikettdaten, Lesen bestimmter Datenfelder auf den Etiketten, Suche nach bestimmten Etikettidentifikationen.

Es wird darauf hingewiesen, dass der in dieser Schrift angewendete Begriff der elektronischen Etikette nebst Identifikationsdaten auch Speicherbereiche für die Anwendung oder Sensoren, welche Messwerte in einen Speicherbereich schreiben, umfasst. Daraus leiten sich -wie dem Fachmann bekannt- entsprechend weitere Routinen zur Datenverarbeitung ab, die wegen der Bekanntheit hier nicht erläutert werden.

In einer weiteren Ausführung der Erfindung können benachbarte RFID-Systemeinheiten berechtigt sein, direkt Parameter über das Netzwerk an ihre benachbarte RFID-Systemeinheit zu versenden. Diese Parameter erweitern oder schränken die Auswahl innerhalb einer laufenden oder zukünftigen Mission ein, welche vom Kontroller vorgegeben ist, so dass der Betrieb insgesamt noch weiter optimiert wird.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen bezeichnet. Es zeigen rein schematisch die
- Fig. 1: ein Blockdiagramm eines erfindungsgemässen RFID-Netzwerks umfassend eine Anzahl RFID-Systemeinheiten, einen Kontroller und einen Anwender-Computer;
- Fig. 2: ein gegenüber Fig. 1 detaillierteres Blockschaltbild einer RFID-Systemeinheit und eines Kontrollers;
- Fig. 3: einen beispielhaften Inhalt einer Mission mit mehreren Feldern von Kontrollparametern und Kontrolllisten, Anweisungen an die Datenverarbeitung und Angaben zur Ausführungszeit;
- Fig. 4: beispielhafte Kontrollparameter einer Mission;
- Fig. 5: beispielhafte Anweisungen für die Datenverarbeitung einer Mission;
- Fig. 6: beispielhafte Anweisungen für die Ausführungszeit einer Mission;
- Fig. 7: ein Zeitdiagramm zur Synchronisation und Interferenzvermeidung für einen Frequenzkanal;
- Fig. 8: eine über eine Zeitachse aufgetragene Umsetzung einer Mission zur Erhebung der Störsituation (Interferenzpotential), und
- Fig. 9: eine spektrale Darstellung des Kanals 65 mit dem Trägersignal 60.

### Wege zur Ausführung der Erfindung

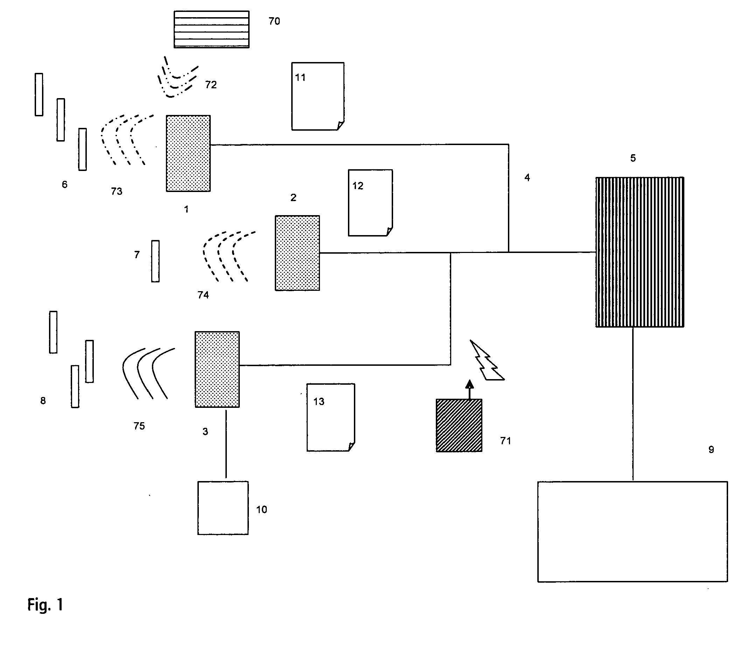

Die Fig. 1 zeigt ein erfindungsgemässes RFID-Netzwerk, umfassend einem Anwender-Computer 9, einem Kontrollprozessor (kurz Kontroller) 5, mehrere RFID-Systemeinheiten 1, 2, 3, wobei Kontroller 5 und RFID-Systemeinheiten 1, 2, 3 mit einem Kommunikationsnetzwerk 4 untereinander verbunden sind, und eine Anzahl elektronischer Etiketten (kurz Etikette) 6, 7, 8. An die RFID-Systemeinheiten 1, 2, 3 können Signalisationselemente 10 angeschlossen sein, wie etwa Lichtschranken oder Näherungssensoren, welche ein Triggersignal zum Starten einer Bearbeitung von Etiketten erzeugen. Andere Signalisationselemente 10, wie etwa akustisches Horn, Lichtampel, dienen der Bestätigung von eingetroffenen Ereignissen, bzw. geben Alarm- und Statusmeldungen aus.

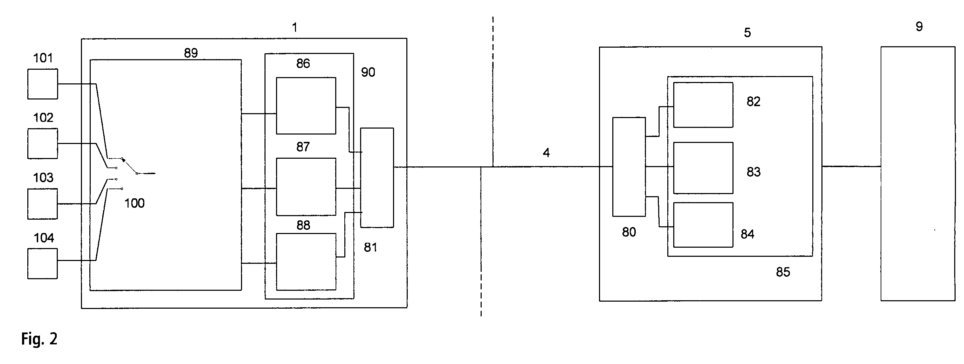

Fig. 2 erhellt den erfindungsgemässen Aufbau der RFID-Systemeinheiten 1, 2, 3 und des Kontrollers 5. Die RFID-Systemeinheit 1 umfasst ein RFID-Schreib/Lesegerät 89 (im Folgenden kurz: Lesegerät 89), eine Missionsempfangsvorrichtung 90 und ein Netzwerk-Interface 81. Das Lesegerät 89 ist mit vier einzelnen, räumlich ausgerichteten Antennen 101 - 104 verbunden, die über einen Antennenwahlschalten 100 geschaltet werden. Die Missionsempfangsvorrichtung 89 umfasst eine Parameterausführungsvorrichtung 86, eine Anweisungsvorrichtung 87 und eine Zeitsynchronisationseinheit 88.

Der Kontroller 5 umfasst ebenfalls ein Netzwerk-Interface 80, das mit dem jeweiligen Netzwerk-Interface 81 einer jeden RFID-Systemeinheit 1, 2, 3 (Fig. 1) über das Kommunikationsnetzwerk 4 verbunden ist. Der Übersicht halber ist in Fig. 2 lediglich eine RFID-Systemeinheit 1 gezeigt, wobei das Kommunikationsnetzwerk 4 mit stichlinierten Zweigen anzeigt, dass sich in diesem Kommunikationsnetzwerk 4 mehrere RFID-Systemeinheiten befinden. Des Weiteren umfasst der Kontroller 5 einen Kontrollparametergenerator 82, einen Anweisungsgenerator 83 und einen Zeitsynchronisationsgenerator 84.

Wie im Folgenden ausgeführt werden wird, kommunizieren mittels Missionen 11, 12, 13 (Fig. 1) die Parameterausführungsvorrichtung 86 mit dem Kontrollparametergenerator 82, die Anweisungsvorrichtung 87 mit dem Anweisungsgenerator 83 und die Zeitsynchronisationseinheit 88 mit dem Zeitsynchronisationsgenerator 84.

Auf dem Kommunikationsnetzwerk 4 werden zwischen Kontroller 5 und den RFID-Systemeinheiten 1, 2, 3 Nachrichtenfelder mit verschiedensten Steuerungsdaten ausgetauscht, an dieser Stelle als Missionen 11, 12, 13 definiert, welche den Betrieb der RFID-Systemeinheiten 1, 2, 3 in einer weitgehend autonomen, aber dennoch kontrollierten Art und Weise erlauben. Dadurch wird das Kommunikationsnetzwerk 4 entlastet und es ist nicht zwingend eine hohe Verfügbarkeit gefordert. Die Missionen 11, 12, 13 sind so ausgestaltet, dass jede RFID-Systemeinheit 1, 2, 3 alle Informationen besitzt, um die vom Anwender-Computer 9 gestellten Aufgaben lösen zu können. Dies setzt eine genügend intelligente RFID-Systemeinheit 1, 2, 3 voraus. Der Kontroller 5 hat die Aufgabe aus der Anweisung vom Anwender-Computer 9 die notwendigen Missionen 11, 12, 13 zusammenzustellen und an die RFID-Systemeinheiten 1, 2, 3 zu versenden. Des Weiteren sammelt der Kontroller 5 die Informationsdaten (Dateninhalte) der gelesenen Etiketten 6, 7, 8 oder Gruppen von Etiketten aller RFID-Systemeinheiten 1, 2, 3 über das Kommunikationsnetzwerk 4 ein und vereint diese zu einem Ereignis oder einer Antwort zu Händen des Anwender-Computers 9. Üblicherweise bedient aus Kostengründen eine RFID-Systemeinheit 1, 2, 3 sequentiell mehrere Antennen 101 - 104, typischerweise 4, welche der Übersicht halber in Fig. 1 nicht dargestellt sind.

Im Unterschied zum Stand der Technik sollen die RFID-Systemeinheiten 1, 2, 3 weder selbständig dynamisch arbeiten, noch der Kontroller 5 jede einzelne Aktion in jeder RFID-Systemeinheit 1, 2, 3 mittels eines Befehls auslösen müssen. Vielmehr ist es Zweck des Kontrollers 5 möglichst flexible Anweisungspakete in Missionen 11, 12, 13 zu packen, so dass jede RFID-Systemeinheit 1, 2, 3 zeitlich geordnet und auftragsbezogen arbeiten kann. Vorteilhaft werden dadurch die Verfügbarkeit der RFID-Systemeinheiten 1, 2, 3 für die Bearbeitung der Etiketten 6, 7, 8 erhöht und gleichzeitig die Anforderung an die Verfügbarkeit des Kommunikationsnetzwerks 4 verringert.

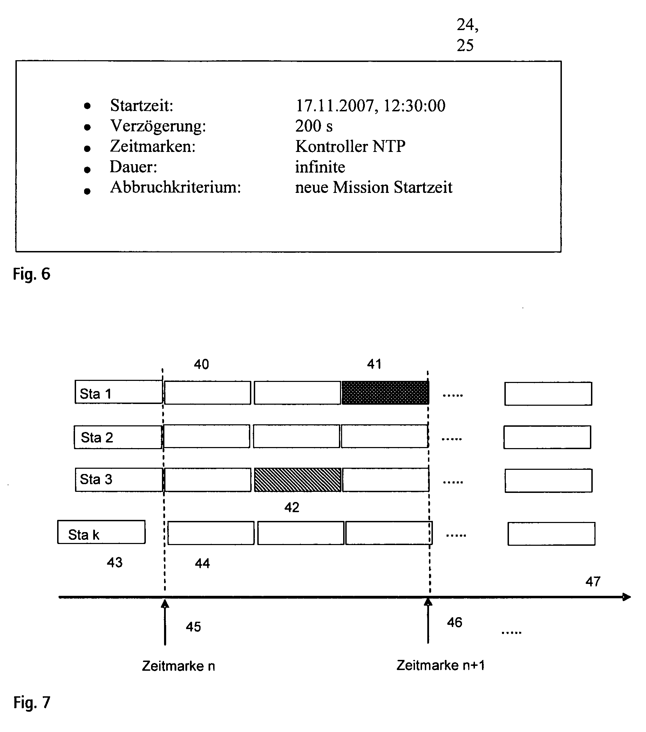

Das vorgeschlagene Verfahren setzt auf eine ausgewogene Verteilung der Ressourcen Prozessorleistung und Speichervolumen auf dem Kontroller 5 und den RFID-Systemeinheiten 1, 2, 3, um auch bei geringer Verfügbarkeit des Kommunikationsnetzwerks 4 dennoch einen synchron gesteuerten, adaptiven Betrieb zu erlauben. Das Mittel, um die Adaptivität bei geringer Verfügbarkeit des Kommunikationsnetzwerks 4 zu erreichen, bildet die Erstellung und der Versand von Missionen 11, 12, 13 durch den Kontroller 5, welche die RFID-Systemeinheiten 1, 2, 3 eine bestimmte Zeit lang in einem genau vorbestimmten Rahmen autonom arbeiten lassen und lediglich durch Zeitmarken 45, 46 (Fig. 6) synchron halten. Die Übertragung von Missionen 11, 12, 13 ist wesentlich effizienter als die Einzelübertragung jeder Teilinformation, besonders bei reduzierter Verfügbarkeit des Kommunikationsnetzwerks 4. Dabei hilft der Kontroller 5, dem RFID-Netzwerk Stabilität zu verleihen, im Unterschied zu konventionellen, dynamisch sich selbst organisierenden RFID-Netzwerken. Dies wiederum erleichtert zusätzliche Aufgaben wie Redundanz, Fallback, Fehlertoleranz, Lastausgleich auf Stufe Kontroller 5, wenn mehr als ein Kontroller 5 zum Einsatz kommen.

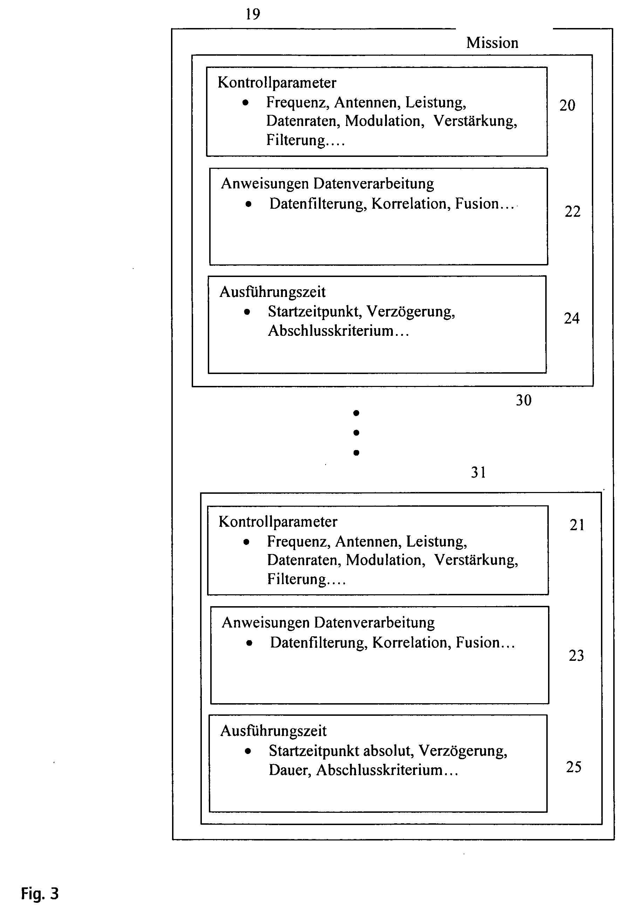

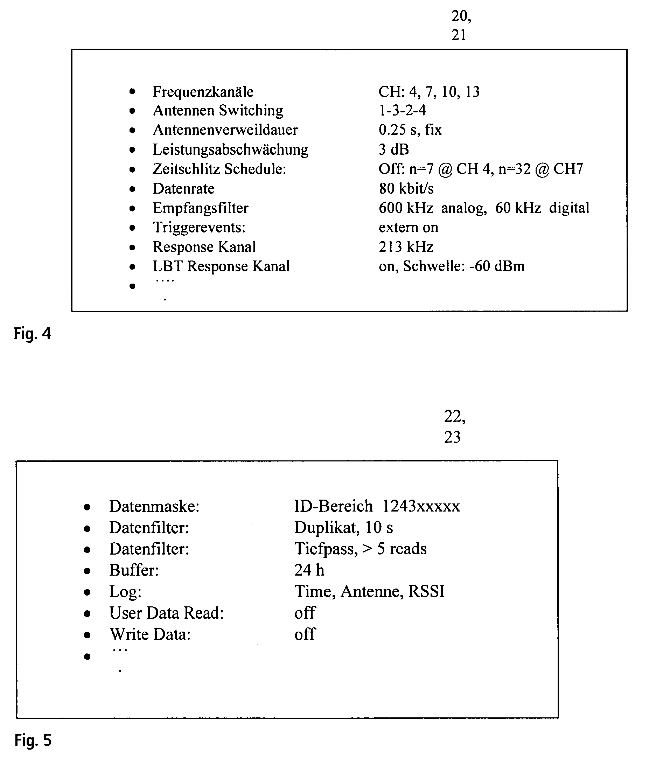

Fig. 3 zeigt beispielhaft einen möglichen Aufbau einer Mission 19, wie diese Missionen 11, 12, 13 in Fig. 1 gezeigt sind. Die Mission 19 besteht aus einem oder mehreren Feldern 20, 21, 22, 23, 24, 25, welche je zu Gruppen von Anweisungspaketen 30, 31 zusammengefasst sein können, beispielsweise die Felder 20, 22, 24 zu der Gruppe 30. Die Felder einer Gruppe 30, 31 sind zusammengehörend und mit jeweils den gesamten Informationen für einen bestimmten Auftrag bestückt. Ausführungsbeispiele dazu sehen wie folgt aus:
Ein erstes Feld 20, 21 enthält Parameter, welche den Betrieb der Hardware und der Signalverarbeitung in RFID-Systemeinheit 1, 2, 3 soweit steuern, wie es für das störungsfreie Zusammenwirken aller RFID-Systemeinheiten 1, 2, 3 notwendig ist, siehe auch Fig. 4. Im Unterschied zum Stand der Technik werden nicht fixe Einstellungen in den RFID-Systemeinheiten 1, 2, 3 deponiert, statt dessen können in jeder Mission 11, 12, 13, 19 Einstellungen effizient neu gewählt werden. Mögliche Einstellungen sind, wie in Fig. 4 beispielhaft dargestellt, die erlaubten Datenraten, Modulationen, zu verwendende Empfangsfilter im analog wie im digital Signal verarbeitenden Bereich, freigegebene Frequenzkanäle, maximale Sendeleistung, Reihenfolge der Zuschaltung der Antennen, Verweildauer auf einer Antenne, Behandlung der Signale externer Signalisationselemente 10. Dem Fachmann sind ohne weiteres weitere Parameter bekannt, deren Einstellungen den Betrieb optimieren können.

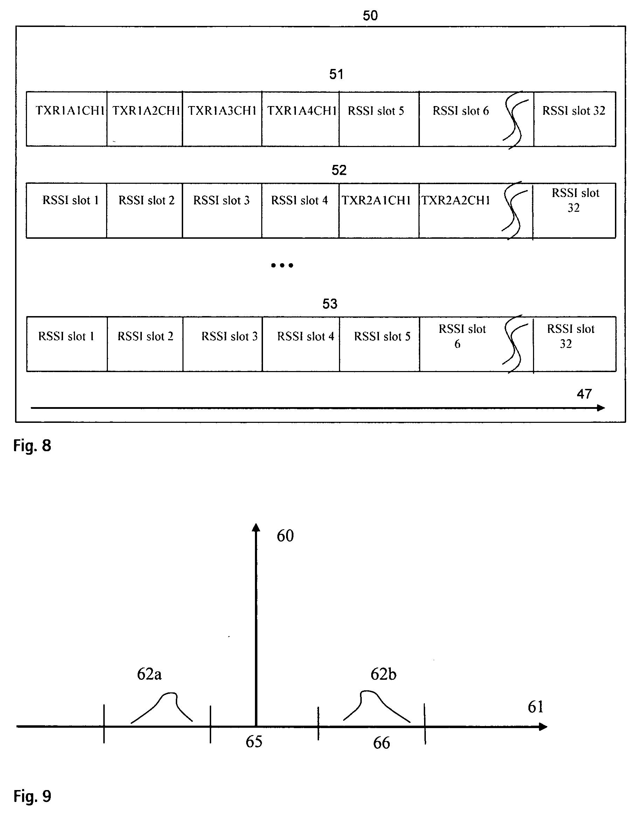

Dazu ist zum Beispiel die Angabe des Frequenzkanals 64, 66 in Fig. 9 für die Rückantwort 62a, 62b der Etiketten 6, 7, 8 zu erwähnen. Die RFID-Systemeinheit 1, 2, 3 kann mit Beginn der Abfrage auf der Etikette 6, 7, 8 diesen Parameter einstellen. Die Rückantwort der Etikette 6, 7, 8 wird sodann auf einem Unterträger derart moduliert, dass das schwache Rückantwortsignal 62a, 62b im Nachbarkanal 64, 66 zum starken Trägersignal 60 im Kanal 65 der Station zu liegen kommt, wie spektral in Fig. 9 dargestellt. Es kann auch sinnvoll sein, um unnötige Bearbeitungsversuche von elektronischen Etiketten zu vermeiden, in diesem Antwortkanal 64, 66 vorgängig eine Pegelmessung (LBT) zu machen und mit einer Schwelle zu vergleichen. Genau solche Prozesse, die die Bearbeitung der Etiketten 6, 7, 8 durch die RFID-Systemeinheit 1, 2, 3 beeinflussen, können innerhalb des Feldes 20, 21 festgelegt und parametrisiert werden.

Eine weiteres Beispiel aus dem Feld 20, 21 stellt die Liste von Interferenz vermeidenden Frequenz-Zeitschlitzen dar. Es handelt sich um eine Art Fahrplan (*Schedule*), welche die Ausnahmen regelt, zu deren Zeiten die betroffene RFID-Systemeinheit 1, 2, 3 auf diesem Kanal nicht senden darf, weil sie sonst eine andere RFID-Systemeinheit 1, 2, 3 stören würde. Wie im Beispiel von Fig. 4 aufgelistet, soll beispielsweise die RFID-Systemeinheit 2 während dem Zeitschlitz 17 nicht auf Kanal 4 senden und während dem Zeitschlitz 32 nicht auf Kanal 7. Der Grund liegt darin, dass die betroffene RFID-Systemeinheit 2 offenbar nahe bei einer anderen RFID-Systemeinheiten 1, 3 installiert ist und sie diese somit beim Empfang der Rückantwort der Etiketten 6, 8 stören würde. Die Angaben zu diesen *Schedules* erhält der Kontroller 5 aus einer bei der Inbetriebnahme oder durch eine zwischenzeitlich wiederholten, speziellen Mission 11, 12, 13, 19, welche das Störpotential und die Belegung der Kanäle durch fremde Sender 71, Fig. 1, erfasst. Eine genaue Erläuterung folgt nach der Diskussion der restlichen, nicht abschliessender Beispiele von Feldern 20 - 25.

Ein zweites Feld 22, 23 für das Ausführungsbeispiel ist in Fig. 5 dargestellt. Es enthält Anweisungen oder Programmteile zur Datenverarbeitung in der RFID-Systemeinheit 1, 2, 3 betreffend die Daten, welche von den durch die RFID-Systemeinheit 1, 2, 3 bearbeiteten Etiketten 6, 7, 8 stammen. Der Kontroller 5 teilt also jeder RFID-Systemeinheit 1, 2, 3 eine Aufgabe zu, mit dem Ziel, schneller und mit weniger Datentransfers auf dem Kommunikationsnetzwerk 4 zu den vom Anwender-Computer 9 verlangten Daten zu gelangen. So wird zum Beispiel im praktischen Betrieb ein bestimmtes Etikett 7, das sich im Feld der RFID-Systemeinheit 2 dauerhaft befindet mehrmals gelesen. Man ist aber lediglich einmal an der Identifikationsnummer oder dem Dateninhalt auf der Etikette 2 interessiert. Mit der Anweisung [Duplikat, 10s] in Feld 22, 23 werden die Identifikationsdaten nur einmal innerhalb 10 Sekunden gespeichert und an den Kontroller 5 gemeldet. Ähnlich wird mit einem Tiefpass Datenfilter verhindert, dass eine nur einmal kurz ansprechende Etikette überhaupt beachtet wird, da es sich um eine Etikette aus der Nachbarschaft handelt (z.B. Etikette 6). Dem Fachmann sind weitere solche parametrisierte Datenverarbeitungsroutinen, wie etwa Korrelation mit gesuchten Etikettnummern, Einschränkung der Identifikationsnummern auf eine Untergruppe oder Zwischenspeicherung für eine bestimmte Zeit, bekannt. Letzteres ist gerade wiederum wichtig, um bei nicht verfügbarem Kommunikationsnetzwerk 4 keine Daten zu verlieren.

Als Besonderheit kann es nützlich sein, bei jeder Bearbeitung einer Etikette 6, 7, 8 durch die RFID-Systemeinheit 1, 2, 3 bestimmte physikalische Messwerte mit zu speichern, wie etwa die Zeit, die Signalstärke oder die Nummer der zugeschalteten Antenne 101 - 104 der RFID-Systemeinheit 1, 2, 3, sofern diese, wie oft in der Praxis, mehrere Antennen 101 - 104 angeschlossen hat. Solche Angaben, statistisch im Kontroller 5 ausgewertet, ermöglichen die Optimierung des Systems, das *Monitoring* der Qualität und kann zur Modifizierung von Missionen 11, 12, 13, 19 beitragen.

Versteht man unter elektronischen Etiketten 6, 7, 8 auch solche, welche mit einem Sensor ausgerüstet sind, so kann auch die Bearbeitung der Messwerte in der RFID-Systemeinheit 1, 2, 3 durch einen Programmteil in Feld 22, 23 in gleicher Weise bestimmt werden.

Ein drittes Feld 24, 25 ist in Fig. 3 und Fig. 6 als Ausführungsbeispiel dargestellt; es regelt den Start, die Dauer und die Beendigung einer Mission 11, 12, 13, 19. Durch die periodische Synchronisation, beispielsweise mittels dem bekannten *Network Time Protocol* (NTP), ist jede RFID-Systemeinheit 1, 2, 3 genügend genau mit der absoluten Zeit versehen. Die RFID-Systemeinheit 1, 2, 3 kann also den Zeitpunkt, ab dem die Mission 11, 12, 13, 19 auszuführen ist, auf Millisekunden genau bestimmen. Eine Verzögerungszeit kann helfen, gewisse Einstellungen über das ganze Kommunikationsnetzwerk 4 oder im Ablauf der Mission 11, 12, 13, 19 so zu steuern, dass keine unzulässigen Systemeinstellungen entstehen. Ein Abbruchkriterium kann eine Mission 11, 12, 13, 19 beenden, wenn dessen Eintreffen logisch wahr geworden ist.

Diese Beschreibung der Felder 20 - 25 ist nicht abschliessend. Der Fachmann kann aber aufgrund dieser Beispiele weitere derartige Felder definieren, andere Inhalte wählen oder andere Kommandostrukturen einsetzen, welche nach dem gleichen Prinzip und mit dem gleichen Ziel benutzt werden.

In Figur 7 ist ein Ausführungsbeispiel betreffend der Synchronisation wiedergegeben. Entlang der Zeitachse 47 finden sich periodisch Zeitmarken 45, 46, welche die absolute Zeit enthalten oder die Zeit, relativ zu einem bekannten Fixpunkt gemessen. Die RFID-Systemeinheiten 1, 2, 3 müssen nicht jede dieser Zeitmarken 45, 46 empfangen können, um synchron genug zu bleiben, da sie selber in ihren Frequenzsynthesizern über sehr stabile Zeitbasen verfügen, mit einer typischen Abweichung < +/- 10ppm. Ist eine RFID-Systemeinheit k aus irgendwelchen Gründen, wie etwa neu ins Kommunikationsnetzwerk 4 eintretend, lange vom Kommunikationsnetzwerk 4 unterbrochen gewesen oder gar eine mobile RFID-Systemeinheit k, welche sich erst gerade ins Kommunikationsnetz 4 begibt, so ist deren anfänglicher Zeitschlitz 43 nicht synchron. Mit dem Empfang der Zeitmarke 45 ist es jedoch einfach die RFID-Systemeinheit k zu den RFID-Systemeinheiten 1, 2, 3 zu synchronisieren. Der nachfolgende Zeitschlitz 44 ist mit Zeitschlitz 40 deckungsgleich. Typischerweise liegt die Dauer eines Zeitschlitzes im Bereich 0.1 bis 1 Sekunde, während die Zeitmarken zum Beispiel alle 1 bis 10 Sekunden ausgesendet werden. Andere Einteilungen sind aber leicht je nach Art der Anwendung und den Grössen, wie Anzahl Antenne pro RFID-Systemeinheit 1, 2, 3 und Anzahl zu bearbeitende Etiketten 6, 7, 8 realisierbar.

In derselben Figur 7 ist auch beispielhaft dargestellt, dass der Zeitschlitz 41 von RFID-Systemeinheit 1 und Zeitschlitz 42 von RFID-Systemeinheit 3 nach Erhalt einer Mission durchgestrichen worden (schwarz) sind. In diesen Zeitschlitzen 41, 42 dürfen die besagten RFID-Systemeinheit in diesem Frequenzkanal nicht senden. Eine solche Liste besteht für jeden Frequenzkanal, sie ist aber in der Regel auf örtlich nahe RFID-Systemeinheiten 1, 2, 3 beschränkt und daher weniger häufig, als erlaubte Zeitschlitze (weiss). Die Zeitmarken können alternativ auch von einer RFID-Systemeinheit 1, 2, 3 ausgesandt werden. Dies ist beim Verfahren mit Zeitmarkenübermittlung über die Luftschnittstelle besonders vorteilhaft. Die Zeit gebende RFID-Systemeinheit 1, 2, 3 agiert in diesem Fall im Auftrag des Kontrollers 5.

Eine spezielle Mission 50, Fig. 8, ist die Erfassung des Interferenzpotentials bei der Inbetriebnahme des RFID-Netzwerks und bei dessen periodischer oder zwischenzeitlicher Überprüfung. Diese Mission 50 enthält eine Abfolge von Zeitschlitzen und Anweisungen an die RFID-Systemeinheiten 1, 2, 3, welche dazu führt, das jeweils genau eine RFID-Systemeinheit 1, 2, 3 für die Dauer eines Zeitschlitzes ein unmoduliertes Trägersignal aussendet, während die anderen RFID-Systemeinheiten 1, 2, 3 am Empfänger den Pegel messen (so genannter RSSI Wert) und dem jeweiligen Zeitschlitz zuordnen und abspeichern. Dies ist in Fig. 8 beispielhaft für acht RFID-Systemeinheiten mit je vier Antennen und einem Kanal als Kommandoabfolge 51 über der Zeitachse 47 aufgetragen für die RFID-Systemeinheit 1, welche im Ausführungsbeispiel vier Antennen besitzt und für den Frequenzkanal 1.

Darin bedeuten die Abkürzungen in den Sequenzen folgendes:
R1, R2 = Lesegerät Nr. 1 bzw. Nr. 2
CH1, CH2 = Frequenzkanal Nr. 1 bzw. Nr. 2
A1,...,A4 = Antenne Nr.1 bis Nr. 4
TX= RFID-Systemeinheit 1, 2, 3 sendet Trägersignal
Slot = Zeitschlitz
RSSI = Empfangen/Messen und mit Slot-Nummer abspeichern

Die Abfolge 52 gilt für RFID-Systemeinheit 2. Zum Schluss messen alle RFID-Systemeinheiten 1, 2, 3, ohne dass eine RFID-Systemeinheit 1, 2, 3 am senden ist, mit der Absicht, Nicht-RFID Sender 71 (siehe Fig. 1) zu erkennen und ihre Pegel zu bestimmen. Die zugehörige Abfolge 53 ist in Fig. 8 dargestellt ist. Vorteilhaft wird diese letzt beschriebene Messung in den Frequenzkanälen 64, 66 der Rückantworten 62a, 62b der Etiketten durchgeführt, da deren Signale durch Nicht-RFID Sender 71 am verletzlichsten sind. Anstelle eines unmodulierten Trägersignals kann auch ein mit Zufallsdaten moduliertes Trägersignal benutzt werden, um die Störung einer RFID-Systemeinheit 1, 2, 3 in den Frequenzkanälen 64, 66 der Rückantworten der Etiketten zu bestimmen. Anstelle der einfachen RSSI Messung kann eine komplexere Analyse mittels *Fast Fourier Transformation* über den interessierenden Frequenzbereich durchgeführt werden, um so eine detailliertere spektrale Übersicht zu erhalten. Die zu übermittelnden Datenmengen sind aber dann um einiges grösser. Das Prozedere wird für jeden Frequenzkanal durchgeführt, entweder beschrieben als Teil der Mission 50 oder durch Definieren einer gesonderten Mission pro Kanal. Am Ende der speziellen Mission 50 werden alle Messwerte in Paketen nach Zeitschlitz geordnet an den Kontroller 5 übertragen. Der Kontroller ermittelt daraus dann die Fahrpläne (*Schedules*), bzw. die nicht erlaubten Zeitschlitze pro Frequenzkanal.

Um ein adaptives Verfahren für das RFID-Netzwerk zu erhalten, ist es in einer umfassenderen Ausführungsform vorteilhaft, wenn gewisse Parameter direkt zwischen RFID-Systemeinheiten 1, 2, 3 ausgetauscht werden können. Dazu wird ebenfalls das Kommunikationsnetzwerk 4 benutzt oder direkt die Luftschnittstelle, wenn diese bereits für Synchronisationszwecke genutzt wird. Dieses Mittel verleiht den Missionen 11, 12, 13, 19 noch mehr Flexibilität. So kann zum Beispiel eine RFID-Systemeinheit 1, den direkten Nachbarn 2, 3 Mitteilung machen, dass sie ein Triggersignal erhalten hat, welchen Frequenzkanal und welche Reihenfolge der Antennen sie benutzen wird. Erhält kurze Zeit später eine der Nachbareinheiten 2, 3 ebenfalls ein Triggersignal, so wird sie bei der Wahl des Frequenzkanals und der Antennenreihenfolge ihrerseits den erhaltenen Parameter der RFID-Systemeinheit 1 berücksichtigen. RFID-Systemeinheiten 1, 2, 3 ohne Triggersignal verhalten sich bei entsprechender Parametermitteilung stumm.

Ein anderes Beispiel kann die Feststellung einer Störung durch einen Nicht-RFID Sender 71 (Fig.1) durch RFID-Systemeinheit 2 in einem bestimmten Frequenzkanal sein. Die Störinformation wird an die Nachbarn 1, 3 weitergeleitet, welche daraufhin diesen Kanal ebenfalls meiden.

Ein drittes nicht abschliessendes Beispiel ist die Übermittlung der erfolgreichen Anmeldung einer mobilen RFID-Systemeinheit 70 (in Fig.1) bei einer Fixeinheit an deren Nachbareinheiten. Insbesondere wenn die RFID-Systemeinheiten 1, 2, 3, 70 über die Luftschnittstelle 72 synchronisiert werden und kommunizieren (vgl. *Reader Service Signal* in EP1719067), bemüht sich die mobile RFID-Systemeinheit 70 als erstes eine Zeitmarke 45, 46 zu empfangen und sich auf das RFID-Netzwerk zu synchronisieren. Als dann meldet sie sich in einem dafür vorgesehenen Zeitschlitz bei der nächstliegenden RFID-Systemeinheit 1, 2, 3 an, beispielsweise in Fig.1 der RFID-Systemeinheit 1 und die mobile RFID-Systemeinheit 70 verlangt nach verfügbarem Frequenzkanal und Zeitschlitzen für die Bearbeitung von Etiketten. Sobald RFID-Systemeinheit 1 diese Anfrage erhalten hat, gibt sie einen Teil ihrer Ressourcen für die mobile RFID-Systemeinheit 70 frei. Die RFID-Systemeinheit 1 teilt daraufhin der mobilen RFID-Systemeinheit 70 und den umliegenden Nachbareinheiten 2, 3 und dem Kontroller 5 die abgegebenen Ressourcen mit. Die umliegenden RFID-Systemeinheit 2, 3 streichen darauf hin gegebenenfalls für die gewährten Zeitschlitze den gewährten Frequenzkanal aus ihrer Liste in der laufenden Mission. Sie tun dies, da sie sonst bei dieser Wahl ein Interferenzproblem mit der mobilen RFID-Systemeinheit 70 bekommen könnten. Der Ressourcenverlust ist aber meist gering, da die umliegenden RFID-Systemeinheiten 1, 2, 3 jeweils bereits orthogonal zu einander zugeteilte Ressourcen haben und somit hauptsächlich die der mobilen RFID-Systemeinheit 70 direkt benachbarte RFID-Systemeinheiten 1, 2, 3 von ihren Ressourcen abgeben muss. Die Kommunikation mit den umliegenden RFID-Systemeinheiten 1, 2, 3 kann dabei ebenfalls über die Luftschnittstelle realisiert sein oder aber über das Kommunikationsnetzwerk 4. Im Konfliktfall entscheidet er Kontroller 5 über angepasste Missionen für die RFID-Systemeinheiten 1, 2, 3. Es ist auf diese Weise möglich mobile RFID-Systemeinheit 70 temporär ins RFID-Netzwerk einzubinden, und ihnen von den Ressourcen Frequenzkanäle und Zeitschlitze der umgebenden fixen RFID-Systemeinheiten 1, 2, 3 einen Teil abzugeben ohne die Funktion aller RFID-Systemeinheiten 1, 2, 3 zu stören und sogar ohne Verbindung zum Kontroller 5 zu benötigen. Eine solche Verbindung müsste ja andernfalls drahtlos bewerkstelligt werden um die Mobilität zu garantieren, z.B. mittels WLAN.

Die Aufzählung der Möglichkeiten zum Einsatz von Missionen und deren Inhalt sind nicht abschliessend. Dem Fachmann sind andere Einsatzmöglichkeiten von Missionen, andere Ausführungsarten des Verfahrens und andere Gliederung der Bestandteile einer Mission einfach erschliessbar, sobald er eine konkrete Anwendung definiert hat.

**Bezugszeichen**

| | |
|---|---|
| 1,2,3 | RFID-Systemeinheit |
| 6,7,8 | elektronische Etiketten |
| 5 | Kontroller |
| 4 | Kommunikationsnetzwerk |
| 9 | Anwender-Computer mit Middleware |
| 10 | Signalisationselement |
| 11,12,13,19 | Mission |
| 20,21 | Dateifeld Kontrollparameter |
| 22,23 | Dateifeld Anweisungen Datenverarbeitung |
| 24,25 | Dateifeld Ausführungszeit |
| 30, 31 | Gruppe mit Teilauftrag |
| 40, 41, 42,43, 44 | Zeitschlitze |
| 45, 46 | Zeitmarken |
| 47 | Zeitachse |
| 50 | Mission für Interferenz Messung |
| 51 | Ablaufdiagramm für RFID-Systemeinheit 1 |
| 52 | Ablaufdiagramm für RFID-Systemeinheit 2 |
| 53 | Ablaufdiagramm für Nicht-RFID Sendererfassung |
| 60 | Spektrum Trägersignal einer RFID-Systemeinheit 1, 2, 3 |
| 61 | Frequenzachse mit Kanaleinteilung |
| 62a, 62b | Spektrum der Rückantwort der Etikette |
| 64 | unterer Nachbarkanal für Rückantwortsignal |
| 65 | Kanal für abfragende RFID-Systemeinheit 1, 2, 3 |
| 66 | oberer Nachbarkanal für Rückantwort |
| 70 | mobile RFID-Systemeinheit |
| 71 | Nicht-RFID Sender |
| 72 | Kommunikation Luftschnittstelle |
| 73, 74, 75 | Luftschnittstellen zu Etiketten |
| 80, 81 | Netzwerk-Interface |
| 82 | Kontrollparametergenerator |
| 83 | Anweisunqsgenerator |
| 84 | Zeitsynchronisationsgenerator |
| 85 | Missionssendevorrichtung |
| 86 | Parameterausführunqsvorrichtunq |
| 87 | Anweisungsvorrichtung |
| 88 | Zeitsynchronisationseinheit |
| 89 | RFID-Schreib-/Lesegerät |
| 90 | Missionsempfangsvorrichtung |
| 100 | Antennenwahlschalter |
| 101 - 104 | Antennen eines RFID-Schreib-/Lesegeräts, räumlich verteilt |

## Patentansprüche

1. RFID-Netzwerk wobei das RFID-Netzwerk umfasst:
einen zentralen Kontroller (5), wobei der zentrale Kontroller (5) an einen Anwendercomputer (9) angeschlossen ist; und
eine Vielzahl von RFID-Systemeinheiten (1, 2, 3), wobei jede der RFID-Systemeinheiten ein RFID-Schreib/Lesegerät (89) für die Bearbeitung von elektronischen RFID-Etiketten (6, 7, 8),
eine Missionsempfangsvorrichtung (90), die dazu eingerichtet ist, Missionsnachrichten (11, 12, 13) zu empfangen, und eine erste Netzwerk-Schnittstelle (81) umfasst,
wobei der zentrale Kontroller (5) umfasst:
eine Missionssendevorrichtung (85), die dazu eingerichtet ist, Missionsnachrichten (11, 12, 13) zu senden, und
eine zweite Netzwerk-Schnittstelle (80),
wobei die zweite Netzwerk-Schnittstelle (80) des zentralen Kontrollers (5) über ein Kommunikationsnetzwerk (4) mit jeder der ersten Netzwerk-Schnittstellen (81) der RFID-Systemeinheiten (1, 2, 3) verbunden ist, und
wobei jede Missionsnachricht (11, 12, 13) Einstellparameter, Listen von Parametern mit Freiheitsgraden, sowie Fahrplandaten und Anweisungen zur Bearbeitung von Daten, die von den elektronischen RFID-Etiketten (6,7,8) durch die RFID-Systemeinheiten empfangen werden, umfasst.

2. RFID-Netzwerk nach Anspruch 1, bei dem die Missionsempfangsvorrichtung (90) eine Parameterausführungsvorrichtung (86), eine Anweisungsvorrichtung (87) und eine Zeitsynchronisationseinheit (88) umfasst.

3. RFID-Netzwerk nach Anspruch 1, bei dem die Missionssendevorrichtung (85) einen Kontrollparametergenerator (82), einen Anweisungsgenerator (87) und einen Zeitsynchronisationsgenerator (84) umfasst.

4. Verfahren zum Betrieb eines RFID-Netzwerks, wobei das RFID-Netzwerk eine Vielzahl von RFID-Systemeinheiten (1, 2, 3) und einen zentralen Kontroller (5) umfasst, der an die RFID-Systemeinheiten (1, 2, 3) über ein Kommunikationsnetzwerk (4) angeschlossen ist, wobei jede der RFID-Systemeinheiten ein RFID-Schreib/Lesegerät (89) für die Bearbeitung von elektronischen RFID-Etiketten (6,7,8) umfasst, und wobei das Verfahren umfasst:
Bereitstellen einer Missionsempfangsvorrichtung (90) und einer ersten Netzwerk-Schnittstelle (81) für jede der RFID-Systemeinheiten (1, 2, 3);
Bereitstellen einer zweiten Netzwerk-Schnittstelle (80) und einer Missionssendevorrichtung (85) für den zentralen Kontroller (5);
Senden einer Missionsnachricht (11, 12, 13) über die zweite Netzwerk-Schnittstelle (80) und die Missionssendevorrichtung (85) zu jeder der RFID-Systemeinheiten (1, 2, 3); und Empfangen der gesendeten Missionsnachricht (11, 12, 13) über die Missionsempfangsvorrichtung (90) und die erste Netzwerkschnittstelle (81) an jeder RFID-Systemeinheit (1, 2, 3);
wobei die Missionsnachricht Einstellparameter, Listen von Parametern mit Freiheitsgraden, sowie Fahrplandaten und Anweisungen zur Bearbeitung von Daten, die von den elektronischen RFID-Etiketten (6,7,8) durch die RFID-Systemeinheiten (1, 2, 3) empfangen werden, umfasst.

5. Verfahren nach Anspruch 4, bei dem jede Missionsempfangsvorrichtung eine Parameterausführungsvorrichtung (86) aufweist, die mit einem Kontrollparametergenerator (82) der Missionssendevorrichtung kommuniziert und jede Missionsempfangsvorrichtung eine Anweisungsvorrichtung (87) umfasst, die mit einem Anweisungsgenerator (83) der Missionssendevorrichtung kommuniziert.

6. Verfahren nach Anspruch 4, bei dem jede Missionsempfangsvorrichtung eine Zeitsynchronisationseinheit umfasst (88), die mit einem Zeitsynchronisationsgenerator (84) der Missionssendevorrichtung kommuniziert.

7. Verfahren nach Anspruch 6, bei dem jede Missionsnachricht (11, 12, 13) mittels vom Kontroller (5) periodisch verteilten Zeitmarken auf den RFID-Systemeinheiten (1, 2, 3) selbständig innerhalb eines Zeitraums, bestehend aus einem oder mehreren Betriebsintervallen, zur Bearbeitung einer Anzahl elektronischer RFID-Etiketten (6,7,8) durchgeführt wird.

8. Verfahren nach Anspruch 6, bei dem jede Missionsnachricht (11, 12, 13) eine Startzeitmarke umfasst, zu der jede Missionsnachricht (11, 12, 13) gestartet werden soll.

9. Verfahren nach Anspruch 8, bei dem die RFID-Systemeinheiten (1, 2, 3) die Startzeitmarke übernehmen und mit Hilfe der periodisch verteilten Zeitmarken alle Missionsnachrichten der RFID-Systemeinheiten (1, 2, 3) synchronisiert werden, zwecks Gewährleistung eines störungsfreien, parallelen Betriebs der RFID-Schreib-/Lesegeräte (89).

10. Verfahren nach Anspruch 4, bei dem jede Missionsnachricht (11, 12, 13) Zeitangaben für einen Zeitpunkt umfasst, zu welchem Zeitpunkt jedes RFID-Schreib-/Lesegerät (89) Dateninhalte gelesener elektronischer RFID-Etiketten (6,7,8) an den Kontroller (5) sendet.

11. Verfahren nach Anspruch 4, bei dem jede Missionsnachricht (11, 12, 13) eine Anweisung zur Abfolge einer Anzahl von Frequenzkanälen oder einer Anzahl von Sende- und Empfangsantennen zum Bearbeiten der elektronischen RFID-Etiketten (6,7,8) umfasst und eine Verweildauer festlegt.

12. Verfahren nach Anspruch 4, bei dem jede Missionsnachricht (11, 12, 13) Anweisungen umfasst, die die selbständige Messung des gegenseitigen Störpotentials zwischen RFID-Systemeinheiten und/oder die Erfassung von Nicht-RFID-Sendern auslösen.

13. Verfahren nach Anspruch 12, bei dem jede Missionsnachricht (11, 12, 13) Anweisungen und/oder Programme zum Bearbeiten von Dateninhalten elektronischer RFID-Etiketten (6,7,8) umfasst, zwecks einer Datenreduktion mehrfach gelesener Dateninhalte oder zwecks einer Entfernung von nur kurzzeitig gelesenen Dateninhalten.

14. Verfahren nach Anspruch 4, bei dem jede Missionsnachricht (11, 12, 13) eine Anweisung umfasst,
die einen direkten Austausch von Informationen zwischen im Kommunikationsnetzwerk befindlichen RFID-Systemeinheiten (1, 2, 3) erlaubt, und bei dem eine Anzahl mobiler RFID-Systemeinheiten (1, 2, 3) sich über eine Luftschnittstelle auf die Zeitmarke synchronisieren, bei einer RFID-Systemeinheit (1, 2, 3) anmelden und von dieser eine Anzahl Frequenzkanäle und eine Anzahl Zeitschlitze zum Betrieb beziehen, wobei diese eine RFID-Systemeinheit (1, 2, 3) den unmittelbar benachbarten RFID-Systemeinheiten (1, 2, 3) und/oder dem Kontroller (5) diese Anzahl Frequenzkanäle und diese Anzahl Zeitschlitze als Information zum Betrieb mitteilt.

## Claims

1. RFID network,
the RFID network comprising:
a central controller (5), the central controller (5) being connected to a user computer (9); and
a multiplicity of RFID system units (1, 2, 3), each of the RFID system units comprising an RFID read/write device (89) for processing electronic RFID tags (6, 7, 8), a mission receiving apparatus (90) which is set up to receive mission messages (11, 12, 13), and a first network interface (81),
the central controller (5) comprising:
a mission transmitting apparatus (85) which is set up to transmit mission messages (11, 12, 13), and
a second network interface (80),
the second network interface (80) of the central controller (5) being connected to each of the first network interfaces (81) of the RFID system units (1, 2, 3) via a communication network (4), and
each mission message (11, 12, 13) comprising setting parameters, lists of parameters with degrees of freedom as well as timetable data and instructions for processing data received from the electronic RFID tags (6, 7, 8) by the RFID system units.

2. RFID network according to Claim 1, in which the mission receiving apparatus (90) comprises a parameter execution apparatus (86), an instruction apparatus (87) and a time synchronization unit (88).

3. RFID network according to Claim 1, in which the mission transmitting apparatus (85) comprises a control parameter generator (82), an instruction generator (87) and a time synchronization generator (84).

4. Method for operating an RFID network, the RFID network comprising a multiplicity of RFID system units (1, 2, 3) and a central controller (5) which is connected to the RFID system units (1, 2, 3) via a communication network (4), each of the RFID system units comprising an RFID read/write device (89) for processing electronic RFID tags (6, 7, 8), and the method comprising:
providing a mission receiving apparatus (90) and a first network interface (81) for each of the RFID system units (1, 2, 3);
providing a second network interface (80) and a mission transmitting apparatus (85) for the central controller (5);
transmitting a mission message (11, 12, 13) to each of the RFID system units (1, 2, 3) via the second network interface (80) and the mission transmitting apparatus (85); and
receiving the transmitted mission message (11, 12, 13) at each RFID system unit (1, 2, 3) via the mission receiving apparatus (90) and the first network interface (81);
the mission message comprising setting parameters, lists of parameters with degrees of freedom as well as timetable data and instructions for processing data received from the electronic RFID tags (6, 7, 8) by the RFID system units (1, 2, 3).

5. Method according to Claim 4, in which each mission receiving apparatus has a parameter execution apparatus (86) which communicates with a control parameter generator (82) of the mission transmitting apparatus, and each mission receiving apparatus comprises an instruction apparatus (87) which communicates with an instruction generator (83) of the mission transmitting apparatus.

6. Method according to Claim 4, in which each mission receiving apparatus comprises a time synchronization unit (88) which communicates with a time synchronization generator (84) of the mission transmitting apparatus.

7. Method according to Claim 6, in which each mission message (11, 12, 13) is independently carried out within a period consisting of one or more operating intervals by means of time markers periodically distributed to the RFID system units (1, 2, 3) by the controller (5) in order to process a number of electronic RFID tags (6, 7, 8).

8. Method according to Claim 6, in which each mission message (11, 12, 13) comprises a starting time marker at which each mission message (11, 12, 13) is intended to be started.

9. Method according to Claim 8, in which the RFID system units (1, 2, 3) accept the starting time marker and all mission messages of the RFID system units (1, 2, 3) are synchronized with the aid of the periodically distributed time markers for the purpose of ensuring interference-free, parallel operation of the RFID read/write devices (89).

10. Method according to Claim 4, in which each mission message (11, 12, 13) comprises time information for a time, at which time each RFID read/write device (89) transmits data contents of read electronic RFID tags (6, 7, 8) to the controller (5).

11. Method according to Claim 4, in which each mission message (11, 12, 13) comprises an instruction for the sequence of a number of frequency channels or a number of transmitting and receiving antennas for processing the electronic RFID tags (6, 7, 8) and stipulates a residence time.

12. Method according to Claim 4, in which each mission message (11, 12, 13) comprises instructions which initiate the independent measurement of the mutual interference potential between RFID system units and/or the detection of non-RFID transmitters.

13. Method according to Claim 12, in which each mission message (11, 12, 13) comprises instructions and/or programs for processing data contents of electronic RFID tags (6, 7, 8) for the purpose of reducing repeatedly read data contents or for the purpose of removing data contents which have been read only briefly.

14. Method according to Claim 4, in which each mission message (11, 12, 13) comprises an instruction which allows information to be directly interchanged between RFID system units (1, 2, 3) in the communication network, and in which a number of mobile RFID system units (1, 2, 3) are synchronized with the time marker via an air interface, register with an RFID system unit (1, 2, 3) and obtain a number of frequency channels and a number of time slots from said RFID system unit for operation, this one RFID system unit (1, 2, 3) informing the immediately adjacent RFID system units (1, 2, 3) and/or the controller (5) of this number of frequency channels and this number of time slots as information for operation.

## Revendications

1. Réseau RFID, le réseau RFID comprenant :
un contrôleur central (5), le contrôleur central (5) étant raccordé à un ordinateur d'utilisateur (9) ; et
une pluralité d'unités de système RFID (1, 2, 3), chacune des unités de système RFID comprenant un appareil d'écriture/lecture RFID (89) pour le traitement d'étiquettes RFID électroniques (6, 7, 8), un dispositif récepteur de mission (90) qui est conçu pour recevoir des messages de mission (11, 12, 13) et une première interface de réseau (81),
le contrôleur central (5) comprenant :
un dispositif émetteur de mission (85) qui est conçu pour émettre des messages de mission (11, 12, 13) et une deuxième interface de réseau (80),
la deuxième interface de réseau (80) du contrôleur central (5) étant reliée par le biais d'un réseau de communication (4) à chacune des premières interfaces de réseau (81) des unités de système RFID (1, 2, 3) et
chaque message de mission (11, 12, 13) comprenant des paramètres de réglage, des listes de paramètres avec des degrés de liberté ainsi que des données d'horaire et des instructions relatives au traitement des données qui sont reçues par les étiquettes RFID électroniques (6, 7, 8) à travers les unités de système RFID.

2. Réseau RFID selon la revendication 1, avec lequel le dispositif récepteur de mission (90) comprend un dispositif d'exécution des paramètres (86), un dispositif d'instruction (87) et une unité de synchronisation dans le temps (88).

3. Réseau RFID selon la revendication 1, avec lequel le dispositif émetteur de mission (85) comprend un générateur de paramètres de contrôle (82), un générateur d'instructions (87) et un générateur de synchronisation dans le temps (84).

4. Procédé pour faire fonctionner un réseau RFID, le réseau RFID comprenant une pluralité d'unités de système RFID (1, 2, 3) et un contrôleur central (5) qui est raccordé aux unités de système RFID (1, 2, 3) par le biais d'un réseau de communication (4), chacune des unités de système RFID comprenant un appareil d'écriture/lecture RFID (89) pour le traitement d'étiquettes RFID électroniques (6, 7, 8), et le procédé comprenant :
mise à disposition d'un dispositif récepteur de mission (90) et d'une première interface de réseau (81) pour chacune des unités de système RFID (1, 2, 3) ;
mise à disposition d'une deuxième interface de réseau (80) et d'un dispositif émetteur de mission (85) pour le contrôleur central (5) ;
émission d'un message de mission (11, 12, 13) par le biais de la deuxième interface de réseau (80) et du dispositif émetteur de mission (85) vers chaque unité de système RFID (1, 2, 3) ; et
réception du message de mission (11, 12, 13) émis par le biais du dispositif récepteur de mission (90) et de la première interface de réseau (81) au niveau de chaque unité de système RFID (1, 2, 3) ;
le message de mission comprenant des paramètres de réglage, des listes de paramètres avec des degrés de liberté ainsi que des données d'horaire et des instructions relatives au traitement des données qui sont reçues par les étiquettes RFID électroniques (6, 7, 8) à travers les unités de système RFID (1, 2, 3).

5. Procédé selon la revendication 4, selon lequel chaque dispositif récepteur de mission possède un dispositif d'exécution des paramètres (86) qui communique avec un générateur de paramètres de contrôle (82) du dispositif émetteur de mission et chaque dispositif récepteur de mission comprend un dispositif d'instruction (87) qui communique avec un générateur d'instructions (83) du dispositif émetteur de mission.

6. Procédé selon la revendication 4, selon lequel chaque dispositif récepteur de mission comprend une unité de synchronisation dans le temps (88) qui communique avec un générateur de synchronisation dans le temps (84) du dispositif émetteur de mission.

7. Procédé selon la revendication 6, selon lequel chaque message de mission (11, 12, 13) est exécuté de manière autonome sur les unités de système RFID (1, 2, 3) par l'intermédiaire de repères temporels distribués périodiquement par le contrôleur (5) au sein d'une période composée d'un ou plusieurs intervalles de temps, en vue de traiter un certain nombre d'étiquettes RFID électroniques (6, 7, 8).

8. Procédé selon la revendication 6, selon lequel chaque message de mission (11, 12, 13) comprend un repère temporel de départ auquel doit être démarré chaque message de mission (11, 12, 13).

9. Procédé selon la revendication 8, selon lequel les unités de système RFID (1, 2, 3) prennent en compte le repère temporel de départ et les unités de système RFID (1, 2, 3) sont synchronisées à l'aide des repères temporels distribués périodiquement de tous les messages de mission en vue de garantir un fonctionnement en parallèle sans défaut des appareils d'écriture/lecture RFID (89).

10. Procédé selon la revendication 4, selon lequel chaque message de mission (11, 12, 13) comprend des indications de temps pour un instant auquel chaque appareil d'écriture/lecture RFID (89) émet vers le contrôleur (5) le contenu des données des étiquettes RFID électroniques (6, 7, 8) lues.

11. Procédé selon la revendication 4, selon lequel chaque message de mission (11, 12, 13) comprend une instruction à propos de la séquence d'un certain nombre de canaux de fréquence ou d'un certain nombre d'antennes d'émission et de réception en vue du traitement des étiquettes RFID électroniques (6, 7, 8) et définit une durée de séjour.

12. Procédé selon la revendication 4, selon lequel chaque message de mission (11, 12, 13) comprend des instructions qui déclenchent la mesure automatique du potentiel de perturbation mutuelle entre les unités de système RFID et/ou la détection d'émetteurs non RFID.

13. Procédé selon la revendication 12, selon lequel chaque message de mission (11, 12, 13) comprend des instructions et/ou des programmes destinés au traitement du contenu des données des étiquettes RFID électroniques (6, 7, 8) en vue d'une réduction des données des contenus de données lus plusieurs fois ou en vue d'une suppression des contenus de données qui ne sont lus que momentanément.

14. Procédé selon la revendication 4, selon lequel chaque message de mission (11, 12, 13) comprend une instruction qui permet un échange direct d'informations entre les unités de système RFID (1, 2, 3) qui se trouvent dans le réseau de communication, et selon lequel un certain nombre d'unités de système RFID (1, 2, 3) mobiles se synchronisent sur le repère temporel par le biais d'une interface hertzienne, s'identifient auprès d'une unité de système RFID (1, 2, 3) et obtiennent de la part de celle-ci un certain nombre de canaux de fréquence et un certain nombre de créneaux temporels, cette unité de système RFID (1, 2, 3) communiquant ce certain nombre de canaux de fréquence et ce certain nombre de créneaux temporels aux unités de système RFID (1, 2, 3) directement voisines et/ou au contrôleur (5) sous la forme d'informations de fonctionnement.
